# EUROPEAN PATENT SPECIFICATION

(11) **EP 1 843 890 B1**
(45) Date of publication and mention of the grant of the patent: **21.01.2009**
(21) Application number: 06707968.1
(22) Date of filing: 01.02.2006
(51) Int. Cl.: B29C 65/06

(54) **ECCENTRIC DEVICE WITH AUTONOMOUS RETURN TO THE IDLE ANGULAR POSITION**
EXZENTRISCHE VORRICHTUNG MIT AUTONOMER RÜCKKEHR IN DIE LEERLAUFWINKELPOSITION
DISPOSITIF EXCENTRIQUE AVEC RETOUR AUTONOME A LA POSITION ANGULAIRE INACTIVE

(30) Priority: 04.02.2005 IT MO20050026
(43) Date of publication of application: 17.10.2007
(73) Proprietor: A-Zeta Gomma Forniture Industriali S.P.A., 41049 Sassuolo (IT)
(72) Inventor: PISTONI, Maurizio, I-41049 Sassuolo (IT)
(74) Representative: Modiano, Micaela Nadia
(86) International application number: PCT/EP2006/050607
(87) International publication number: WO 2006/082212

(56) References cited:
- DD-A1- 232 458
- US-A- 3 860 468
- US-A- 4 247 346
- US-A- 4 450 032
- US-B1- 6 470 941

## Description

### Technical Field

The present invention relates to an eccentric device for converting a rotary motion in a reciprocating translational motion, or vice versa, of the rod-and-crank type, in which the return of device to the so-called "idle" angular position occurs autonomously without any intervention on the part of the operator.

### Background Art

Eccentric or cam-based mechanisms used to convert a rotary motion into a reciprocating translational motion or vice versa are already currently known. They generally have a preset stroke, which is determined by the eccentricity of the mechanism and/or by the dimensions of the crank.

These mechanisms comprise, for example, an eccentric shaft and a linkage which is connected to the eccentric pivot of the shaft and transmits a translational motion to a piston. Mechanisms of this type generally are unable to determine precisely the idle angular position of the eccentric, which in the classical configuration depends on the particular angular stop position of the shaft. Accordingly, it is not possible to establish the stop position of the piston.

However, there are applications in which it is necessary to determine precisely the stop position of the piston and therefore the angular position of the eccentric.

Eccentric mechanisms are in fact used for example in welding machines for the butt-welding of two portions of belt made of thermoplastic material, which is produced by the mutual friction of the ends of the belt portions by means of a reciprocating movement for a time which is sufficient to heat the material until it melts.

Once the material has melted, the welding machine must keep the two portions of belt in position so that their two faces mate perfectly, so that the welded parts constitute a single body without discontinuities. To make the two faces mate precisely, it is therefore necessary to be able to determine exactly the angular position of the eccentric pivot when the mechanism is stationary.

In traditional eccentric systems, this precise positioning of the eccentric pivot when the shaft stops cannot be ensured and therefore it is not possible to determine precisely the stop position of the piston.

As a solution to the described technical problem, eccentric devices already exist which are capable of adjusting the stroke of the linkage and thus determine the idle position of the piston.

For example, eccentric mechanisms are known which comprise an eccentric shaft and a bushing with an eccentric cavity in which the eccentric pivot of the shaft is arranged. The eccentricities of the pivot and of the cavity are such that when the system is stationary the shaft and the bushing are concentric, so that in output from the mechanism there is no eccentricity. The mechanism may further comprise an eccentricity adjustment element which, when the system is started, under the action of centrifugal force, forces the bushing to rotate with respect to the shaft, consequently producing an eccentricity in output from the device. Finally, the eccentric mechanism is also provided with return mechanisms which ensure that the concentric configuration is restored when the system is stopped.

The concentric configuration that the device always has in the absence of centrifugal force forces the piston, when the system is stopped, to assume the intermediate position between the two ends of the stroke that it is allowed to perform.

In the case of the thermal bonding of two portions of belt, this ensures that when the system is idle the two faces always mate precisely.

Although this device solves the described technical problem, it is not free from drawbacks. In particular, it has a composite structure, which is provided by means of special parts which are designed specifically, thus making the manufacturing process complicated and onerous and entailing substantial difficulties at the industrial production level.

An eccentric device is disclosed in US-A-3860468 which comprises the feutures of the preamble of claim 1.

### Disclosure of the Invention

The aim of the present invention is to eliminate the above-mentioned drawbacks of known types of eccentric mechanism, by providing an eccentric device with autonomous return of the system to the idle configuration which has a simple structure provided by means of widely available elements.

Within this aim, an object of the present invention is to provide an eccentric device with autonomous return of the system to the idle configuration which can be manufactured by means of a simple manufacturing process.

Another object of the present invention is to devise an eccentric device with autonomous return of the system to the idle configuration which can be manufactured at competitive costs.

This aim and these and other objects that will become better apparent hereinafter are achieved by the eccentric device according to the invention, which comprises an eccentric shaft the eccentric pivot of which is suitable to be connected to a linkage for converting a rotary motion into a reciprocating translational motion, the eccentric shaft being arranged at least partially in a frame, and characterized in that it comprises a first plurality of magnets, which are arranged on the eccentric shaft at the portion of the eccentric shaft that is arranged within the frame, said frame accommodating a second plurality of magnets at the portion of the frame that is suitable to accommodate the eccentric shaft.

Conveniently, the pluralities of magnets are arranged so that when the eccentric device stops, the eccentric shaft assumes at least one preset angular position.

Advantageously, the first plurality of magnets can comprise four magnets which are mutually spaced by 90°.

### Brief description of the Drawings

Further characteristics and advantages of the invention will become better apparent from the following detailed description of a preferred but not exclusive embodiment of the eccentric device, illustrated by way of nonlimiting example in the accompanying drawing, wherein:
Figure 1 is a perspective view of a portion of a thermal bonding machine according to a preferred embodiment, which uses the eccentric device according to the invention;
Figure 2 is an exploded perspective view of the portion of thermal bonding machine of Figure 1;
Figure 3 is a top view of the portion of thermal bonding machine of Figure 1;
Figure 4 is a side view of the eccentric device according to the invention, in which the portion of thermal bonding machine of Figure 1 is shown partially in cross-section; and
Figure 5 is a sectional view of the thermal bonding device of Figure 1, taken along the line A-A of Figure 4.

### Ways of carrying out the Invention

The figures illustrate details of a particular embodiment of a thermal bonding machine 10, which uses an eccentric device 1 according to the invention. For the sake of better comprehension of the invention, the elements of the thermal bonding machine 10 that are illustrated are also described briefly hereinafter.

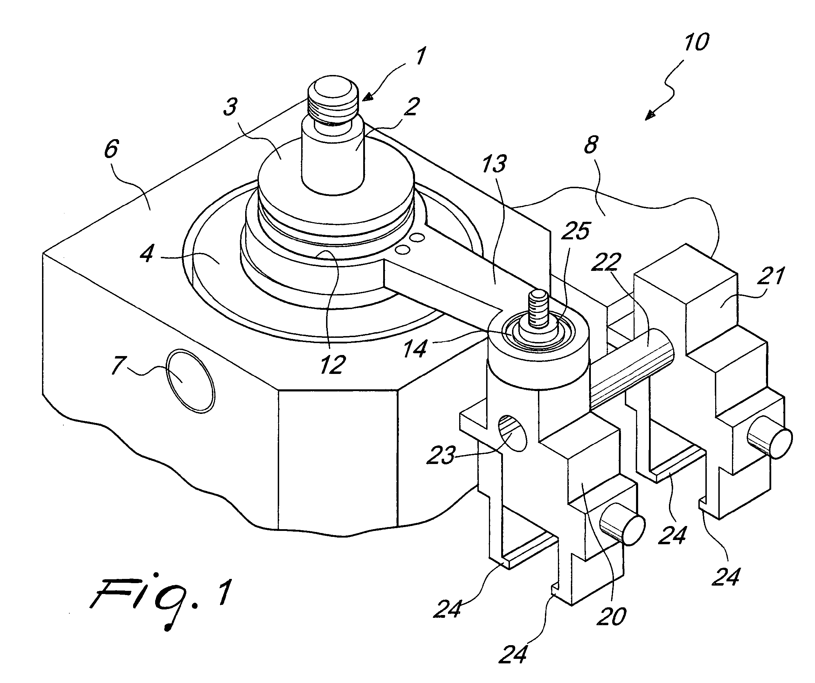

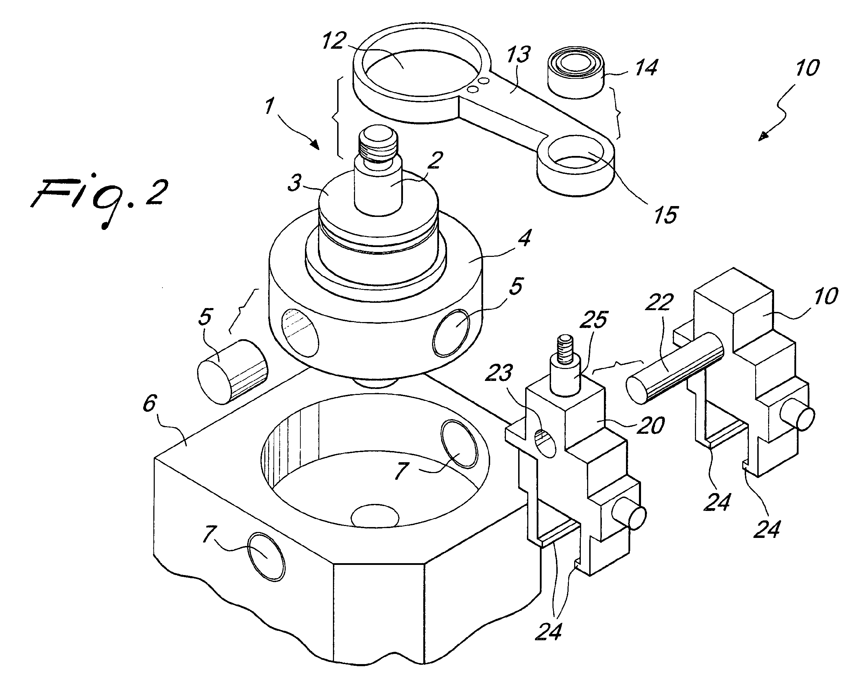

As shown in Figure 1 and in greater detail in Figure 2, the thermal bonding machine 10 comprises two clamps 20 and 21, a first clamp 21 being fixed to a fixed structure 8 of the thermal bonding machine 10, the second clamp being connected by means of a linkage 13 to the eccentric device 1.

The fixed clamp 21 comprises a pivot 22 for coupling to the movable clamp 20 and claws 24 whose mutual distance can be adjusted in order to retain one of the elements to be subjected to thermal bonding, not shown in the figure. In turn, the movable clamp 20 too comprises two claws 24 whose distance can be adjusted in order to retain the second element to be subjected to thermal bonding, also not shown, by friction with the first element, which is kept stationary by means of the fixed clamp 21.

In order to allow the friction between the two elements to be sufficient to cause partial melting of the faces subjected to friction, said elements are preferably made of thermoplastic material, such as for example polyurethane or PVC.

The movable clamp 20 further comprises a receptacle 23, which is suitable to receive the pivot 22 of the fixed clamp 21 so that the movable clamp is constrained to a rotary (oscillating) motion about the axis traced by the pivot 22.

Moreover, the movable clamp 20 comprises a preadjusted spring, not shown in the figure, which is suitable to produce the translational motion of the movable clamp along the pivot 22 as the elements to be subjected to thermal bonding wear due to friction, so that the movable clamp 20 approaches the fixed clamp 21, thus ensuring constantly full contact between the two elements to be welded.

In an alternative embodiment, the pivot 22 might be omitted, so that the movable clamp 20 can follow freely the reciprocating translational motion transferred to it by the linkage 13.

Finally, the movable clamp comprises, in an upper region, a tang 25 for coupling to the small eye 15 of the linkage 13.

If the movable clamp 20 is constrained by the pivot 22, an oscillating bearing 14 is interposed between the tang 25 and the linkage 13 and allows to convert the reciprocating translational motion transferred by the linkage 13 into an oscillating rotary motion of the clamp about the pivot 22.

The linkage 13 is coupled by means of its big eye 12 to the eccentric device 1 according to the invention.

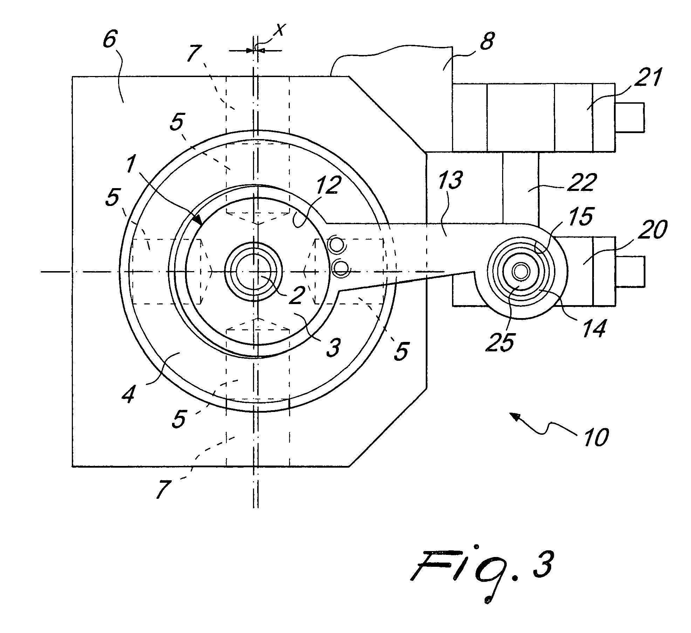

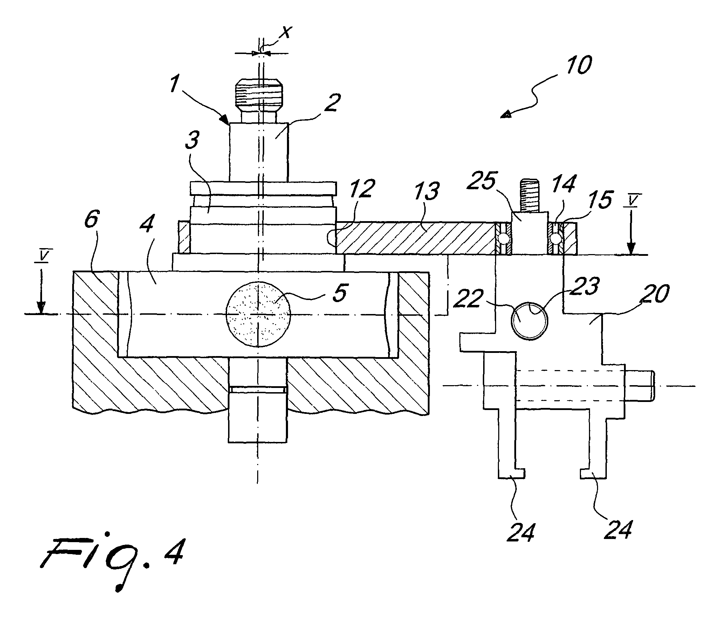

As shown schematically in Figures 3 and 4, the eccentric device 1 comprises an eccentric shaft 2, which is provided with a substantially cylindrical eccentric pivot 3 whose eccentricity is indicated in the figures by means of the reference letter "x".

The connection between the linkage 13 and the eccentric device 1 is provided by means of the coupling of the big eye 12 of the linkage 13 to the eccentric pivot 3, optionally by interposing bearings.

In this manner, the linkage 13 converts the rotary motion of the pivot 3 into a reciprocating translational motion which it transmits to the movable clamp 20.

The eccentric shaft 2 of the eccentric device 1 further comprises a concentric pivot 4, in which there are a plurality of permanent magnets 5 which face outward with respect to the shaft 2.

As can be seen from the figures, the concentric pivot 4 is arranged in a frame 6 of the thermal bonding machine that surrounds it, which in turn accommodates a plurality of permanent magnets 7 which face the shaft 2.

The arrangement of the permanent magnets 5 and 7 is such that the shaft 2, if not subjected to additional forces, is attracted to a precise angular position by the magnetic force generated by the interaction of the permanent magnets 5 and 7 arranged on the eccentric shaft 2 and in the frame 6.

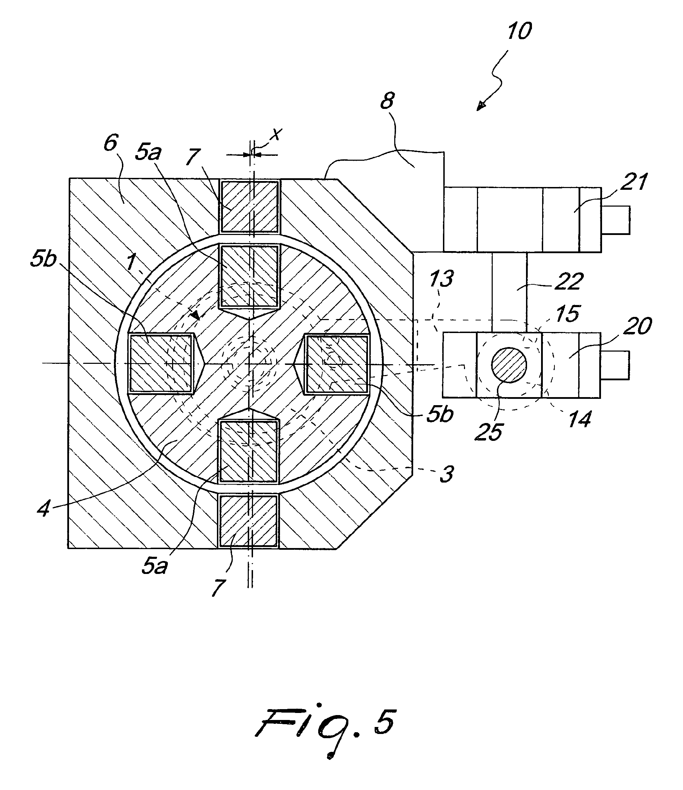

As shown in Figure 5, in this particular embodiment the eccentric shaft 2 is provided with four permanent magnets 5a and 5b, which are mutually spaced by 90° and face the frame 6 alternately with the south magnetic pole or with the north magnetic pole.

In particular, at the angular positions of the shaft 2 that correspond to the top and bottom dead centers of the eccentric pivot 3, there are respective permanent magnets 5a, in which the polarity that faces the frame 6 is the south pole, while the other two magnets 5b direct the north pole toward the frame 6.

In turn, the frame 6 accommodates two permanent magnets 7, which are mutually spaced by 180° and in which the north pole is directed toward the eccentric shaft 2. The magnets 7 are arranged at the positions in which the magnets 5a of the shaft 2 must be arranged in the idle condition, so that the movable clamp 20 is arranged in the intermediate position of its translational or oscillating stroke, thus being located precisely in front of the fixed clamp 21. In this manner, the faces of the two elements to be subjected to thermal bonding mate precisely.

The attraction force generated between the permanent magnets 5a accommodated on the shaft 2 and the permanent magnets 7 provided on the frame 6 in fact ensures that in the idle condition the shaft 2 always stops at the angular positions that correspond to the intermediate position of the stroke of the movable clamp 20.

Further, the repulsion generated between the magnets 5b and 7 which have identical facing poles ensures the rotation of the shaft 2 until said angular stop positions are reached.

Of course, the person skilled in the art understands without effort that what has been described can be applied trivially also to an embodiment in which the polarities of the permanent magnets are reversed.

The operation of the device according to the invention is as follows.

Once the motor has started, the shaft 2 of the eccentric device 1 turns, and the eccentric pivot 3 rotates together with it eccentrically. The eccentric rotation of the pivot 3 forces the linkage 13 to perform a combined rotary and translational motion, which in turn transmits to the tang 25 of the movable clamp 20 a reciprocating translational motion.

The presence of the fixed pivot 22, which constrains the movable clamp 20 to a rotary motion about the pivot 22, prevents the clamp 20 from performing the reciprocating translational motion imparted thereto by the linkage 13.

This reciprocating translational motion is converted by the constraint of the pivot 22 and by the presence of an oscillating bearing 14 into a rotary oscillation of the movable clamp 20 about the pivot 22, so that the element retained in the claws 24 of the movable clamp 20 performs an oscillating motion, rubbing against the element retained in the claws 24 of the fixed clamp 21.

The oscillating motion is maintained until the two elements retained in the claws 20 and 21 have a partial melting of the respective faces subjected to friction.

Then, when the motor is stopped, under the action of the attraction and repulsion forces of the magnets 5 and 7 accommodated on the concentric pivot 4 and on the frame 6, the shaft autonomously reaches one of the two angular positions that correspond to the intermediate position of the stroke of the movable clamp 20.

This ensures that the element retained by the movable clamp 20 stops in perfect match with the element retained by the fixed clamp 21 and that the respective faces mate completely.

This position is maintained for a period sufficient to allow cooling and consequent solidification of the two elements.

Said elements, being kept in contact during said step, are welded together, forming a single element without discontinuities.

In practice it has been found that the device according to the invention thus described ensures, when the motor is stopped, the autonomous positioning of the shaft of the eccentric device in the angular positions that correspond to the intermediate position of the stroke of the movable clamp.

Moreover, it has been ascertained that the device according to the invention thus described can be manufactured easily and provides autonomous positioning without the aid of special structural elements.

Moreover, it has been found that the device can be manufactured at competitive production costs.

The invention thus conceived is susceptible of numerous modifications and variations, all of which are within the scope of the appended claims. Thus, for example, the number and arrangement of the magnets on the concentric pivot and on the frame can vary according to requirements. Further, as an alternative to the constrained oscillating motion, the movable clamp can be free to perform a reciprocating translational motion. Finally, the permanent magnets can be replaced with any other electromagnetic device capable of generating attraction and repulsion forces by interaction.

All the details may further be replaced with other elements.

In practice, the materials used, as well as the dimensions, may be any according to requirements.

Therefore, the scope of the protection of the claims must not be limited by the drawings or by the preferred embodiments given in the description by way of examples.

## Claims

1. An eccentric device comprising an eccentric shaft (2), the eccentric pivot (3) of which is adapted to be connected to a linkage for converting a rotary motion into a reciprocating translational motion, said eccentric shaft (2) being arranged at least partially in a frame (6), **characterized in that** it comprises a first plurality of magnets (5), which are arranged on the eccentric shaft (2) at the portion of the eccentric shaft (2) that is arranged within said frame (6), said frame (6) accommodating a second plurality of magnets (7) at the portion of the frame (6) that is adapted to accommodate said eccentric shaft (2).

2. The eccentric device according to claim 1, **characterized in that** said pluralities of magnets (5 and 7) are arranged so that when the eccentric device (1) stops, the eccentric shaft (2) assumes a preset angular position.

3. The eccentric device according to any one of the preceding claims, **characterized in that** said first plurality of magnets (5) comprises four magnets (5a, 5b), which are mutually spaced by 90°.

4. The eccentric device according to claim 3, **characterized in that** said four magnets (5a, 5b) are directed toward the frame (6) with opposite poles alternately.

5. The eccentric device according to any one of the preceding claims, **characterized in that** said second plurality of magnets (7) comprises two magnets which are mutually spaced by 180° and face the eccentric shaft (2) with the same polarity.

6. The eccentric device according to any one of the preceding claims, **characterized in that** said pluralities of magnets (5 and 7) are pluralities of permanent magnets.

7. The eccentric device according to any one of claims 1-6, **characterized in that** said eccentric shaft (2) comprises a concentric pivot (4).

8. The eccentic device according to claim 7, **characterized in that** said concentric pivot (4) is arranged in said frame (6).

9. The eccentric device according to claim 7, **characterized in that** said concentric pivot (4) accommodates said first plurality of magnets (5).

## Patentansprüche

1. Eine exzentrische Vorrichtung, die eine exzentrische Welle (2) umfasst, deren exzentrischer Drehpunkt (3) ausgebildet ist, um mit einer Kopplung zur Umwandlung einer Drehbewegung in eine translatorische Hin- und Herbewegung verbunden zu werden, wobei die exzentrische Welle (2) zumindest teilweise in einem Rahmen (6) angeordnet ist, **dadurch gekennzeichnet, dass** sie eine erste Vielzahl von Magneten (5) umfasst, welche auf der exzentrischen Welle (2) an dem Abschnitt der exzentrischen Welle (2) angeordnet sind, der innerhalb des Rahmens (6) angeordnet ist, wobei der Rahmen (6) eine zweite Vielzahl von Magneten (7) an dem Abschnitt des Rahmens (6) aufnimmt, der ausgebildet ist, um die exzentrische Welle (2) aufzunehmen.

2. Die exzentrische Vorrichtung gemäß Anspruch 1, **dadurch gekennzeichnet, dass** die Vielzahlen von Magneten (5 und 7) so angeordnet sind, dass, wenn die exzentrische Vorrichtung (1) anhält, die exzentrische Welle (2) eine voreingestellte Winkelposition einnimmt.

3. Die exzentrische Vorrichtung gemäß einem beliebigen der obigen Ansprüche, **dadurch gekennzeichnet, dass** die erste Vielzahl von Magneten (5) vier Magneten (5a, 5b) umfasst, die voneinander um 90° beabstandet sind.

4. Die exzentrische Vorrichtung gemäß Anspruch 3, **dadurch gekennzeichnet, dass** die vier Magneten (5a, 5b) mit entgegengesetzten Polen alternierend zum Rahmen (6) hin ausgerichtet sind.

5. Die exzentrische Vorrichtung gemäß einem beliebigen der obigen Ansprüche, **dadurch gekennzeichnet, dass** die zweite Vielzahl von Magneten (7) zwei Magneten umfasst, die voneinander um 180° beabstandet sind und mit derselben Polarität zur exzentrischen Welle (2) hin weisen.

6. Die exzentrische Vorrichtung gemäß einem beliebigen der obigen Ansprüche, **dadurch gekennzeichnet, dass** die Vielzahlen von Magneten (5 und 7) Vielzahlen von Dauermagneten sind.

7. Die exzentrische Vorrichtung gemäß einem beliebigen der Ansprüche 1-6, **dadurch gekennzeichnet, dass** die exzentrische Welle (2) einen konzentrischen Drehpunkt (4) umfasst.

8. Die exzentrische Vorrichtung gemäß Anspruch 7, **dadurch gekennzeichnet, dass** der konzentrische Drehpunkt (4) in dem Rahmen (6) angeordnet ist.

9. Die exzentrische Vorrichtung gemäß Anspruch 7, **dadurch gekennzeichnet, dass** der konzentrische Drehpunkt (4) die erste Vielzahl von Magneten (5) aufnimmt.

## Revendications

1. Dispositif à excentrique comprenant un arbre à excentrique (2), dont l'axe excentrique (3) est conçu pour être relié à une bielle pour convertir un mouvement de rotation en un mouvement de translation alternatif, ledit arbre à excentrique (2) étant agencé au moins partiellement dans un bâti (6), **caractérisé en ce qu'**il comprend une première pluralité d'aimants (5), qui sont disposés sur l'arbre à excentrique (2) au niveau de la partie de l'arbre à excentrique (2) qui est agencée à l'intérieur dudit bâti (6), ledit bâti (6) recevant une seconde pluralité d'aimants (7) au niveau de la partie du bâti (6) qui est conçue pour recevoir ledit arbre à excentrique (2).

2. Dispositif à excentrique selon la revendication 1, **caractérisé en ce que** lesdites pluralités d'aimants (5 et 7) sont agencées de sorte que, quand le dispositif à excentrique (1) s'arrête, l'arbre à excentrique (2) prend une position angulaire prédéterminée.

3. Dispositif à excentrique selon une quelconque des revendications précédentes, **caractérisé en ce que** ladite première pluralité d'aimants (5) comprend quatre aimants (5a, 5b), qui sont mutuellement espacés de 90°.

4. Dispositif à excentrique selon la revendication 3, **caractérisé en ce que** lesdits quatre aimants (5a, 5b) sont dirigés vers le bâti (6) avec des pôles opposés alternativement.

5. Dispositif à excentrique selon une quelconque des revendications précédentes, **caractérisé en ce que** ladite seconde pluralité d'aimants (7) comprend deux aimants qui sont mutuellement espacés de 180° et font face à l'arbre à excentrique (2) avec la même polarité.

6. Dispositif à excentrique selon une quelconque des revendications précédentes, **caractérisé en ce que** lesdites pluralité d'aimants (5 et 7) sont des pluralités d'aimants permanents.

7. Dispositif à excentrique selon une quelconque des revendications 1-6, **caractérisé en ce que** ledit arbre à excentrique (2) comprend un axe concentrique (4).

8. Dispositif à excentrique selon la revendication 7, **caractérisé en ce que** ledit axe concentrique (4) est agencé dans ledit bâti (6).

9. Dispositif à excentrique selon la revendication 7, **caractérisé en ce que** ledit axe concentrique (4) reçoit ladite première pluralité d'aimants (5).
